# EUROPEAN PATENT APPLICATION

(11) **EP 2 136 328 A1**
(43) Date of publication of application: **23.12.2009**
(21) Application number: 09250848.0
(22) Date of filing: 25.03.2009
(51) Int. Cl.: G06Q 30/00, G06Q 50/00

(54) **Embedding information**

(30) Priority: 29.05.2008 US 156410
(71) Applicant: Sony Corporation, Tokyo 108-0075 (JP); Sony Electronics, Inc., Park Ridge, NJ 07656 (US)
(72) Inventor: Hwang, Paul, Burbank, CA 91501 (US); Georgis, Nikolaos, San Diego, CA 92128 (US); Carpio, Fredrik, San Diego, CA 92127 (US); Ohren, Christopher, San Diego, CA 92129 (US)
(74) Representative: Scaddan, Gareth Casey

(57) **Abstract**

A system and method for embedding information onto an electronic device includes a memory device that is coupled to the electronic device for storing embedded information that the electronic device may then access and utilize. A device user initially utilizes a device ordering system to create a device order that specifically identifies the embedded information. The device order is then utilized during a device manufacturing process to image the memory device with the embedded information before providing the electronic device to the device user.

## Description

### Field of the Invention

This invention relates generally to embedding information. Embodiments of this invention relate to techniques for implementing electronic devices, and more particularly to a system and method for embedding information in an electronic device.

### Background of the Invention

Implementing effective methods for providing electronic content is a significant consideration for designers and manufacturers of contemporary electronic devices. However, effectively providing content utilized by devices may create substantial challenges for system designers. For example, enhanced demands for increased content resources may require more system processing power and require additional software capabilities. An increase in processing or software requirements may also result in a corresponding detrimental economic impact due to increased production costs and operational inefficiencies.

Furthermore, enhanced device capability to perform various advanced operations may provide additional benefits to a system user, but may also place increased demands on the control and management of various system components. For example, an enhanced electronic network device that requires various types of electronic content, such as computer games, may benefit from an effective implementation because of the large amount and complexity of the digital data involved.

Due to growing demands on system resources and substantially increasing data magnitudes, it is apparent that developing new techniques for providing electronic content to electronic devices is a matter of concern for related electronic technologies. Therefore, for all the foregoing reasons, developing effective techniques for providing required content remains a significant consideration for designers, manufacturers, and users of contemporary electronic devices.

### Summary of the Invention

Various respective aspects and features of the invention are defined in the appended claims. Combinations of features from the dependent claims may be combined with features of the independent claims as appropriate and not merely as explicitly set out in the claims.

In accordance with embodiments of the present invention, a system and method for embedding information in an electronic device are disclosed. In one embodiment, a device user initially performs a logon procedure with an ordering device for connecting to a network server. The device user utilizes an order GUI of the ordering device to begin creating a device order for implementing the electronic device. The device user selects a specific device model and desired device features for the electronic device. The device user may optionally link a user profile to the current device order. The device user may then select any desired content items for embedding onto the electronic device. The content items may include any appropriate types of electronic information. For example, the content items may include, but are not limited to, computer games, movies, audio recordings, graphics, images, video clips, written text, and software programs.

Next, the device user may select specific desired user preferences and device settings for the electronic device. An order manager from the network server may automatically identify and add current versions of appropriate firmware to the device order. The order manager may also access and add embedding recommendations from a recommendation engine to the device order. A manufacturer then utilizes the finalized device order to image a memory device for the electronic device. The manufacturer then assembles and tests the electronic device with the embedded information already stored onto the memory. Finally, the fully-assembled electronic device is provided to the device user, who may then immediately utilize the embedded information. For at least the foregoing reasons, embodiments of the present invention therefore provide an improved system and method for embedding information in an electronic device.

### Brief Description of the Drawings

Embodiments of the invention will now be described with reference to the accompanying drawings, throughout which like parts are referred to by like references, and in which:
FIG. 1 is a block diagram of a device ordering system, in accordance with one embodiment of the present invention;
FIG. 2 is a block diagram for one embodiment of the network server of FIG. 1;
FIG. 3 is a block diagram for one embodiment of the server memory of FIG. 2;
FIG. 4 is a block diagram for one embodiment of the recommendation engine of FIG. 3;
FIG. 5 is a block diagram for one embodiment of an electronic device;
FIG. 6 is a block diagram for one embodiment of the device memory of FIG. 5;
FIG. 7 is a block diagram for one embodiment of an order GUI;
FIG. 8 is a diagram for one embodiment of a device order from FIG. 3; and
FIGS. 9A-9C provide a flowchart of method steps for embedding information in an electronic device, in accordance with one embodiment of the present invention.

### Description of the Example Embodiments

Embodiments of the present invention seek to provide an improvement in techniques for implementing electronic devices. The following description is presented to enable one of ordinary skill in the art to make and use the invention, and is provided in the context of a patent application and its requirements. Various modifications to the disclosed embodiments will be apparent to those skilled in the art, and the generic principles herein may be applied to other embodiments. Therefore, the present invention is not intended to be limited to the embodiments shown, but is to be accorded the widest scope consistent with the principles and features described herein.

Embodiments of the present invention comprise a system and method for embedding information in an electronic device, and includes a memory device that is coupled to the electronic device for storing embedded information that the electronic device may then access and utilize. A device user initially utilizes a device ordering system to create a device order that specifically identifies various elements of the embedded information. The device order is then utilized during a device manufacturing process to image the memory device with the embedded information before providing the electronic device to the device user.

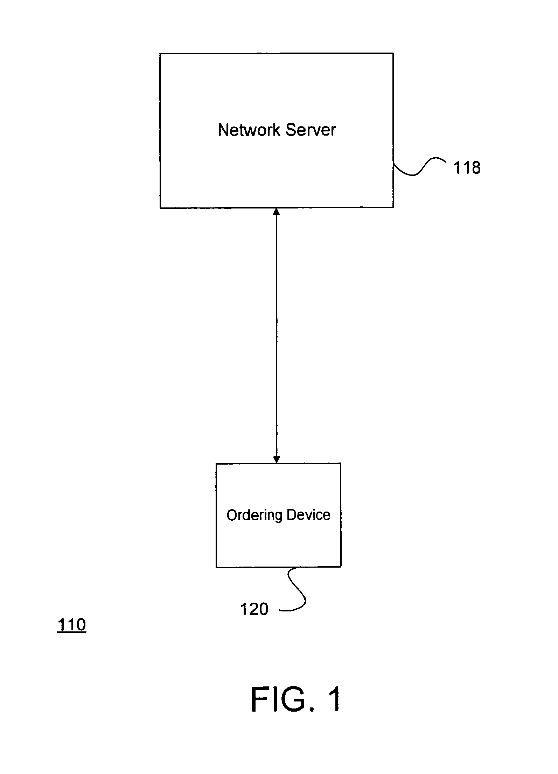

Referring now to FIG. 1, a block diagram of a device ordering system 110 is shown, in accordance with one embodiment of the present invention. In the FIG. 1 embodiment, device ordering system 110 may include, but is not limited to, a network server 118 and at least one ordering device 120. In alternate embodiments, device ordering system 110 may be implemented by utilizing components and configurations in addition to, or instead of, certain of those components and configurations discussed in conjunction with the FIG. 1 embodiment.

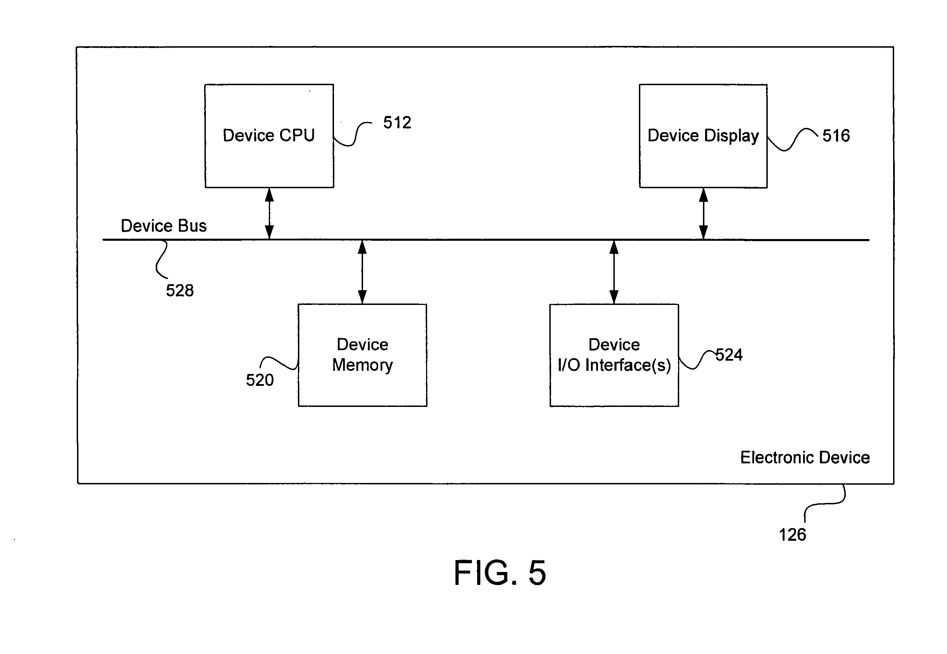

In the FIG. 1 embodiment, a device user may utilize ordering device 120 to communicate with network server 118 to perform a device ordering procedure for selecting and configuring an electronic device (see FIG. 5) for purchase by the device user. In the FIG. 1 embodiment, ordering device 120 may be implemented in any effective manner. For example, ordering device 120 may include a computer device that communicates with network server 118 over the Internet or any other appropriate connection. In the FIG. 1 embodiment, network server 118 may be implemented in any effective manner to provide support for ordering a customized electronic device from a device origination entity.

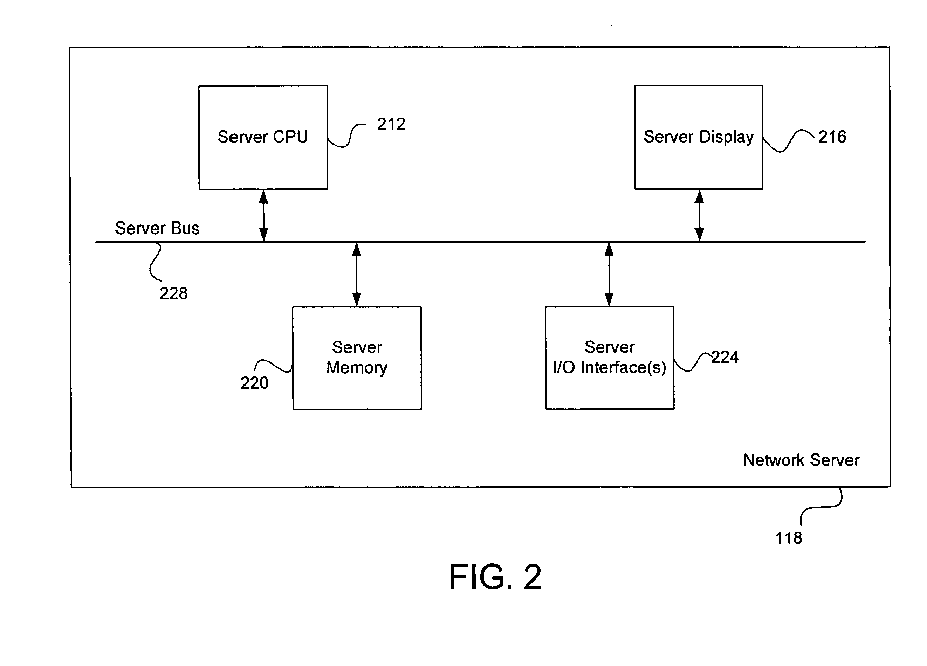

In accordance with an embodiment of the present invention, a device user may therefore communicate with network server 118 prior to any manufacture process for advantageously selecting desired types of content and other information for embedding in the ordered electronic device. The electronic device may thus be provided to the device user in a state of full readiness that facilitates immediate and trouble-free utilization of the electronic device. Further details regarding the implementation and utilization of the FIG. 1 device ordering system 110 are discussed below in conjunction with FIG. 2-9.

Referring now to FIG. 2, a block diagram for one embodiment of the FIG. 1 network server 118 is shown. In the FIG. 2 embodiment, network server 118 includes, but is not limited to, a server central processing unit (server CPU) 212, a server display 216, a server memory 220, and one or more server input/output interface(s) (server I/O interface(s)) 224. The foregoing components of network server 118 may be coupled to, and communicate through, a server bus 228. In alternate embodiments, network server 118 may alternately be implemented using components and configurations in addition to, or instead of, certain of those components and configurations discussed in conjunction with the FIG. 2 embodiment.

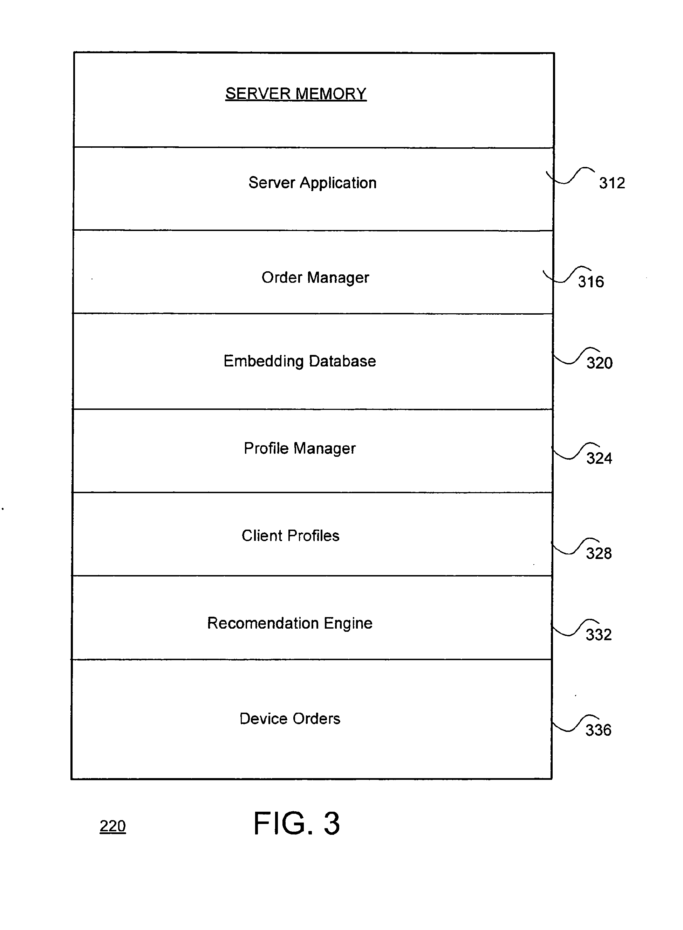

In the FIG. 2 embodiment, server CPU 212 may be implemented to include any appropriate and compatible microprocessor device that preferably executes software instructions to thereby control and manage the operation of network server 118. The FIG. 2 server display 216 may include any effective type of display technology including a cathode-ray-tube monitor or a liquid-crystal display device with an appropriate screen for displaying various information to a server user. In the FIG. 2 embodiment, server memory 220 may be implemented to include any combination of desired storage devices, including, but not limited to, read-only memory (ROM), random-access memory (RAM), and various types of non-volatile memory, such as floppy disks, memory sticks, compact disks, or hard disks. The contents and functionality of server memory 220 are further discussed below in conjunction with FIG. 3.

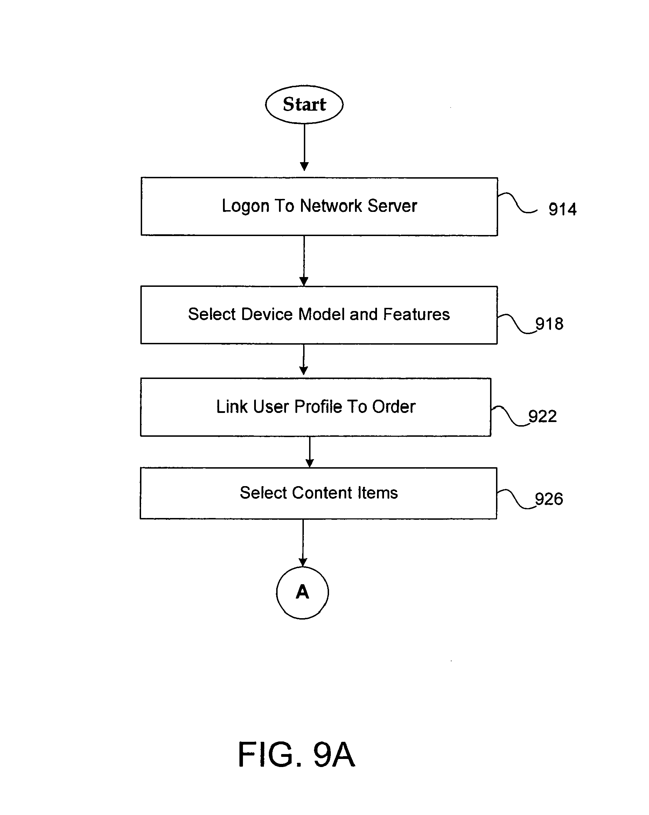

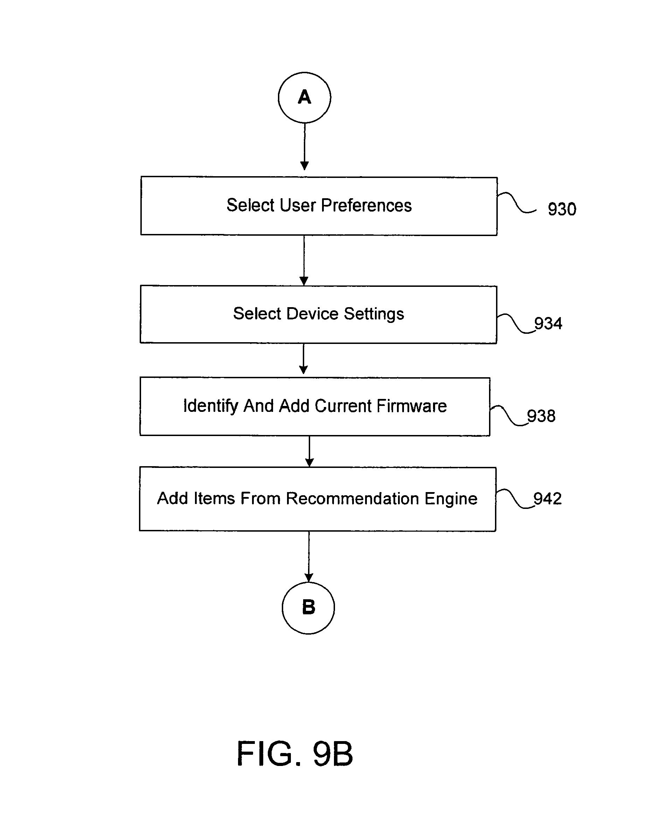

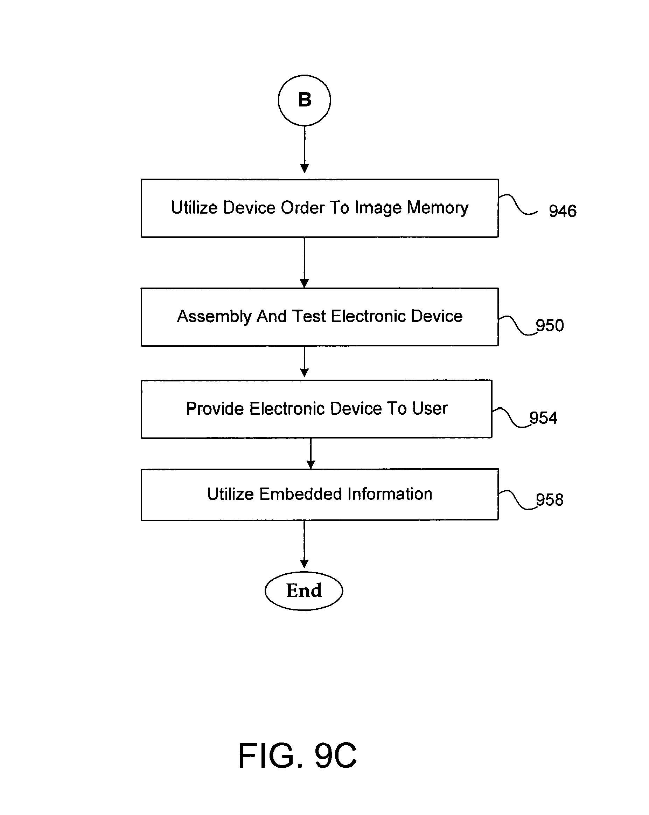

In the FIG. 2 embodiment, server I/O interface(s) 224 may include one or more input and/or output interfaces to receive and/or transmit any required types of information by network server 118. Server I/O interface(s) 224 may include one or more means for allowing a server user to communicate with network server 118. The implementation and utilization of network server 118 is further discussed below in conjunction with FIGS. 9A-C.

Referring now to FIG. 3, a block diagram for one embodiment of the FIG. 2 server memory 220 is shown. In the FIG. 3 embodiment, server memory 220 may include, but is not limited to, a server application 312, an order manager 316, an embedding database 320, a profile manager 324, client profiles 328, a recommendation engine 332, and one or more device orders 336. In alternate embodiments, server memory 220 may include various other components and functionalities in addition to, or instead of, certain those components and functionalities discussed in conjunction with the FIG. 3 embodiment.

In the FIG. 3 embodiment, server application 312 may include program instructions that are preferably executed by server CPU 212 (FIG. 2) to perform various functions and operations for network server 118. The particular nature and functionality of server application 312 typically varies depending upon factors such as the specific type and particular functionality of the corresponding network server 118. In the FIG. 3 embodiment, network server 118 may utilize an order manager 316 for communicating with a device user through ordering device 120 (FIG. 1) to dynamically create a device order 336 for configuring and manufacturing a new electronic device. In the FIG. 3 embodiment, embedding database 320 may include any required information for ordering manager 316 to furnish to the device user during the creation of the foregoing device order 336.

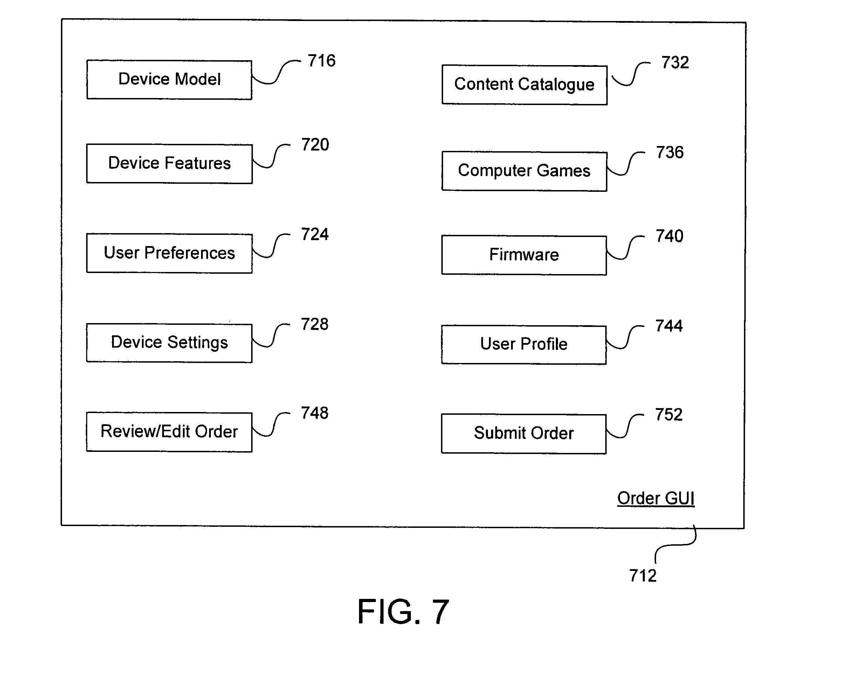

In the FIG. 3 embodiment, profile manager 324 may be utilized to compile and analyze client profiles 328 that each include information corresponding to a device user that utilizes device ordering system 110 to create a device order. In the FIG. 7 embodiment, client profiles 328 may include any desired type of information regarding a corresponding device user. For example, client profiles 328 may include demographic information that includes, but is not limited to, a user age, a user gender, a user location, a user ethnicity, a user marital status, user family information, a user annual income bracket, a user occupation, user hobbies, user interests, and a user political affiliation.

In the FIG. 3 embodiment, recommendation engine 332 may be utilized to analyze various types of predefined client statistics and profile information to create embedding recommendations for embedding relevant information onto appropriate electronic devices. For example, in certain embodiments, recommendation engine 332 may analyze order information in device orders 336 to develop appropriate embedding recommendations. Additional details regarding the operation and implementation of order manager 316 are further discussed below in conjunction with FIGS. 9A-C.

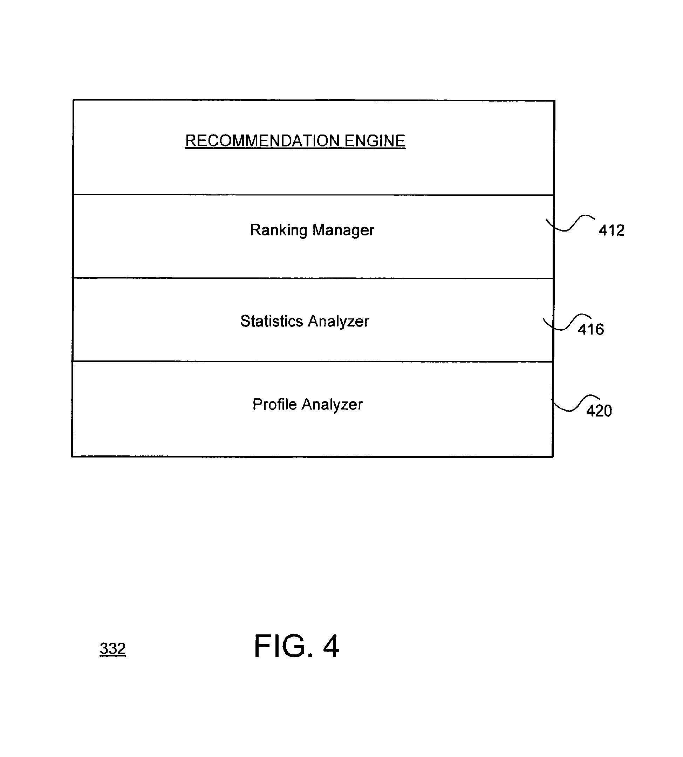

Referring now to FIG. 4, a diagram for one embodiment of the FIG. 3 recommendation engine 332 is shown. In the FIG. 4 embodiment, recommendation engine 332 may include, but is not limited to, a ranking manager 412, a statistics analyzer 416, and a profile analyzer 420. In alternate embodiments, recommendation engine 332 may include other elements and configurations in addition to, or instead of, certain of those elements and configurations discussed in conjunction with the FIG. 4 embodiment.

In the FIG. 4 embodiment, recommendation engine 332 may utilize a ranking manager 412 for analyzing various relevant types of individual client statistics and client profiles for a given electronic device 126 (FIG. 1) to thereby generate embedding recommendations for that electronic device. For example, ranking manager 412 may dynamically generate embedding recommendation for an electronic device by utilizing a statistics analyzer 416 to analyze predefined client statistics. The client statistics may include any appropriate information or data including, but not limited to, specific details from a current device order 336 (FIG. 3). In addition, ranking manager 412 may also utilize a profile analyzer 420 to analyze information from a corresponding client profile 328 (FIG. 3). The functionality and utilization of recommendation engine 332 are further discussed below in conjunction with FIGS. 9A-C.

Referring now to FIG. 5, a block diagram for one embodiment of an electronic device 126 is shown. The electronic device 126 may be configured and manufactured in accordance with a previously-created device order 336, as discussed above. In the FIG. 5 embodiment, electronic device 126 may include, but is not limited to, a device central processing unit (device CPU) 512, a device display 516, a device memory 520, and one or more device input/output interface(s) (device I/O interface(s)) 524. The foregoing components of electronic device 126 may be coupled to, and communicate through, a device bus 528.

In alternate embodiments, electronic device 126 may readily be implemented using various components and configurations in addition to, or instead of, certain of those components and configurations discussed in conjunction with the FIG. 5 embodiment. Furthermore, in the FIG. 5 embodiment, electronic device 126 may be implemented as any type of appropriate electronic device. For example, in certain embodiments, electronic device 126 may be implemented as any type of stationary or portable consumer-electronics device, such as an electronic gaming device, a television, a personal computer, a settop box, an audio-visual entertainment device, a cellular telephone, or a personal digital assistant (PDA).

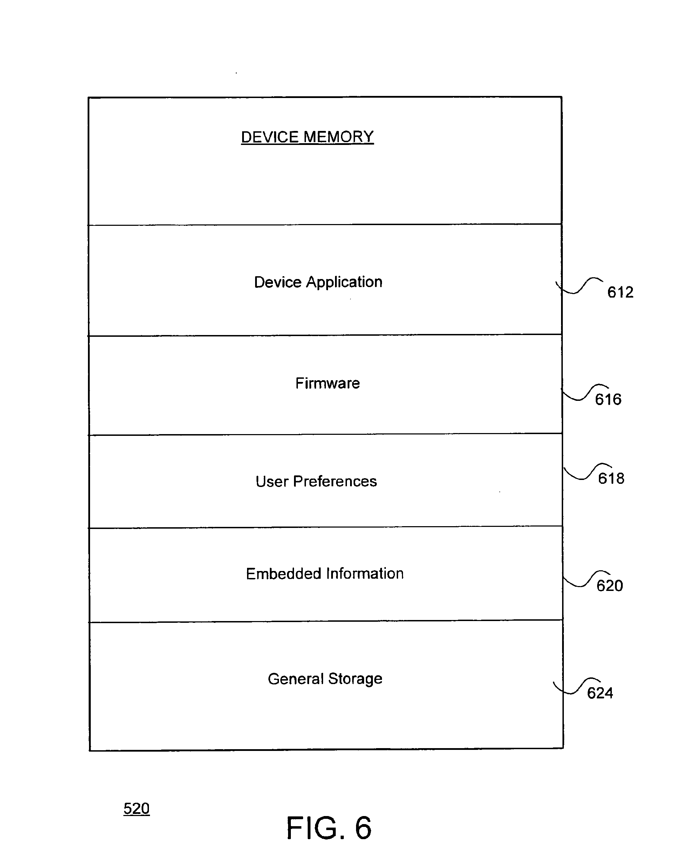

In the FIG. 5 embodiment, device CPU 512 may be implemented to include any appropriate and compatible microprocessor device that preferably executes software instructions to thereby control and manage the operation of electronic devices 126. The FIG. 5 device display 516 may include any effective type of display technology including a cathode-ray-tube monitor or a liquid-crystal display device with an appropriate screen for displaying various information to a device user. In the FIG. 5 embodiment, device memory 520 may be implemented to include any combination of desired storage devices, including, but not limited to, read-only memory (ROM), random-access memory (RAM), and various types of non-volatile memory, such as floppy disks, memory sticks, compact disks, or hard disks. The contents and functionality of device memory 520 are further discussed below in conjunction with FIG. 6.

In the FIG. 5 embodiment, device I/O interface(s) 524 may include one or more input and/or output interfaces to receive and/or transmit any required types of information by electronic device 126. Device I/O interface(s) 524 may include one or more means for allowing a device user to communicate with other entities in electronic network 110 (FIG. 1A). For example, the foregoing means may include a keyboard device, a wireless remote-control device, a speech-recognition module with corresponding microphone, a graphical user interface with touch-screen capability, a hand-held device controller unit, or a selection button array mounted externally on electronic device 126. The ordering and implementation of electronic device 126 is further discussed below in conjunction with FIGS. 9A-C.

Referring now to FIG. 6, a block diagram for one embodiment of the FIG. 5 device memory 520 is shown. In the FIG. 6 embodiment, device memory 520 includes, but is not limited to, a device application 612, firmware 616, user preferences 618, embedded information 620, and general storage 624. In alternate embodiments, device memory 520 may include various other components and functionalities in addition to, or instead of, certain of those components and functionalities discussed in conjunction with the FIG. 6 embodiment.

In the FIG. 6 embodiment, device application 612 may include program instructions that are preferably executed by a device CPU 512 (FIG. 5) to perform various functions and operations for a electronic device 126. The particular nature and functionality of device application 612 typically varies depending upon factors such as the specific type and particular functionality of the corresponding electronic device 126.

In the FIG. 6 embodiment, firmware 616 may include any appropriate types of software programs or routines. For example, in certain embodiments, firmware 616 may include an operating system for electronic device 126 and various types of software drivers. In the FIG. 6 embodiment, user preferences 618 may include any type of information regarding the preferences and settings desired by a device user of a given electronic device 126. In the FIG. 6 embodiment, embedded information 620 may include any types of electronic information that is specified by a device user in a device order 336 (FIG. 3) prior to manufacture of electronic device 126. In the FIG. 6 embodiment, electronic device 126 may utilize general storage 624 for storing any type of electronic information. The configuration and embedding of embedded information 620 is further discussed below in conjunction with FIGS. 9A-C.

Referring now to FIG. 7, a block diagram for one embodiment of an order graphical user interface (order GUI) 712 is shown. In certain embodiments, order GUI 712 may be displayed on ordering device 120 (FIG. 1). The FIG. 7 embodiment is presented for purposes of illustration, and in alternate embodiments, order GUI 712 may include components, functionalities, and information in addition to, or instead of, certain of those components, functionalities, and information discussed in conjunction with the FIG. 7 embodiment.

In the FIG. 7 embodiment, order GUI 712 has a series of icons for selecting corresponding order functions to create a customized device order 336 (FIG. 3) for implementing an electronic device 126 (FIG. 5). In alternate embodiments, any other effective configuration and functions may be utilized to implement order GUI 712. In the FIG. 7 example, a device model icon 716 may be utilized to display and select model type options for electronic device 126, and a device features icon 720 may be similarly utilized to display and select model feature options for electronic device 126.

In the FIG. 7 embodiment, a content catalogue icon 732 may be utilized to display and select from a range of content items that include, but are not limited to, movies, audio recordings, graphics, images, video clips, written text, and software programs. Similarly, a computer games icon 736 may be utilized to display and select from a variety of computer games. In the FIG. 7 embodiment, a user preferences icon 724 may be utilized to display and select any desired user preferences or device settings for electronic device 126.

In the FIG. 7 embodiment, a firmware icon 740 may be utilized to review and edit automatically-selected current versions of any firmware for implementing electronic device 126. A user profile icon 744 may be utilized to create, edit, and link an appropriate user profile to the current device order. A review/edit order icon 748 may be utilized to review and edit a device order 336. Finally, a submit order icon 752 may be activated to finalize and submit a device order 336 for electronically embedding the specified information from the device order 336 onto a memory device for inclusion in the final manufacture and assembly of a corresponding electronic device 126.

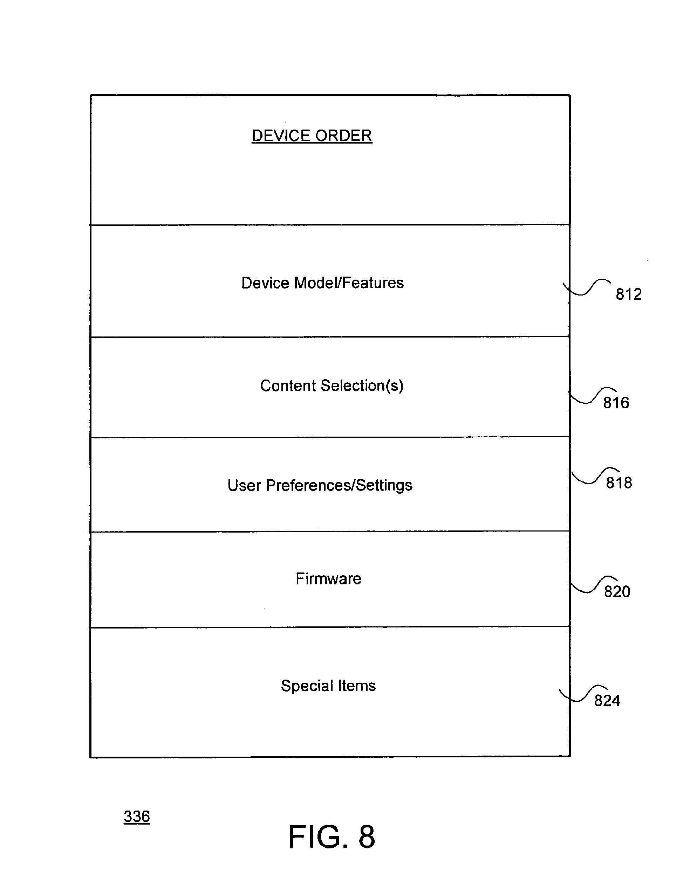

Referring now to FIG. 8, a diagram for one embodiment of a FIG. 3 device order 336 is shown. In certain embodiments, the FIG. 8 device order 336 may be created by utilizing the order GUI 712 of FIG. 7. In alternate embodiments, device order 336 may be created in any other effective manner, including manually printing out device order 336 as a text hardcopy version for physical delivery to a manufacturer of electronic device 126. The FIG. 8 embodiment is presented for purposes of illustration, and in alternate embodiments, device orders 336 may include components and information in addition to, or instead of, certain of the components and information discussed in conjunction with the FIG. 8 embodiment.

In the FIG. 8 embodiment, a device model/features section 812 may specify a device model and one or more device features for electronic device 126. A content selection(s) section 816 may specify one or more content items that include, but are not limited to, movies, computer games, audio recordings, graphics, images, video clips, written text, and software programs. Similarly, a user preferences/settings section 818 may specify desired user preferences and/or device settings for electronic device 126.

In the FIG. 8 embodiment, a firmware section 820 may indicate one or more current versions of firmware that is automatically-selected by order manager 316 (FIG. 3) for implementing electronic device 126. A special items section 824 may be utilized to indicate any special items for embedding in electronic device 126. For example, various types of special offers may be included in device order 336 in the special items section 824. The generation and utilization of device order 336 are further discussed below in conjunction with FIGS. 9A-C.

Referring now to FIGS. 9A-C, a flowchart of method steps for embedding information onto an electronic device 126 is shown, in accordance with one embodiment of the present invention. The flowchart of FIGS. 9A-C is presented for purposes of illustration, and in alternate embodiments, the present invention may utilize steps and sequences other than those steps and sequences discussed in conjunction with the embodiment of FIGS. 9A-C.

In the FIG. 9A embodiment, in step 914, a device user initially performs a logon procedure with an ordering device 120 for connecting to a network server 118 (FIG. 1). In step 918, the device user utilizes an order GUI 712 (FIG. 7) to begin creating a device order 336 for implementing the electronic device 126. In particular, the device user selects a specific device model and desired device features for the electronic device 126. In step 922, the device user may optionally link a client/user profile 328 to the current device order 336. In step 926, the device user may select any desired content items for embedding onto the electronic device 126. The content items may include any appropriate types of electronic information. For example, the content items may include, but are not limited to, computer games, movies, audio recordings, graphics, images, video clips, written text, and software programs.

In steps 930 and 934, the device user may select specific desired user preferences and device settings for the electronic device 126. In step 938, an order manager 316 from the network server 118 automatically identifies and adds current versions of appropriate firmware 616 to the device order 336. In step 942, the order manager 316 accesses and adds embedding recommendations from a recommendation engine 332 to the device order 336. In step 946, a manufacturer utilizes the finalized device order 336 to image a memory device 520 for the electronic device 126. In step 950, the manufacturer assembles and tests the electronic device 126 with the embedded information 620 already stored onto memory 520. In step 954, the fully-assembled electronic device 126 is provided to the device user who may then immediately utilize the embedded information 620 in step 958. For at least the foregoing reasons, embodiments of the present invention therefore provides an improved system and method for embedding information in an electronic device.

The invention has been explained above with reference to certain embodiments. Other embodiments will be apparent to those skilled in the art in light of this disclosure. For example, embodiments of the present invention may readily be implemented using certain configurations and techniques other than those described above. Additionally, embodiments of the present invention may effectively be used in conjunction with systems other than those described above. Therefore, these and other variations upon the discussed embodiments are intended to be covered by the present invention, which is limited only by the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A system for implementing an electronic device, comprising:
a memory device coupled to said electronic device, said memory device storing embedded information for said electronic device to access and utilize; and
a device order that a device user creates to specifically identify said embedded information, said device order being utilized during a device manufacturing process to image said memory device with said embedded information.

2. The system of claim 1 wherein said device user creates said device order prior to said device manufacturing process.

3. The system of claim 1 wherein said device user creates said device order by utilizing a device ordering system that includes an ordering device and a network server.

4. The system of claim 3 wherein said network server includes an order manager that references an embedding database to provide information to said device user for creating said device order.

5. The system of claim 3 wherein said ordering device communicates with said network server over an Internet connection, said network server being supported by a manufacturer of said electronic device.

6. The system of claim 1 wherein said embedded information includes one or more electronic content items.

7. The system of claim 6 wherein said electronic content items include movies, audio recordings, graphics, images, video clips, written text, and software programs.

8. The system of claim 1 wherein said embedded information includes one or more computer games.

9. The system of claim 1 wherein said embedded information includes one or more user preferences and device settings.

10. The system of claim 1 wherein said embedded information includes current device firmware for said electronic device.

11. The system of claim 10 wherein an order manager from a device ordering system automatically selects and inserts said current device firmware into said device order.

12. The system of claim 4 wherein said device user utilizes an order GUI of said ordering device to communicate with said network server for creating said device order.

13. The system of claim 12 wherein said device user utilizes said order GUI to select a device model and one or more device features for said device order.

14. The system of claim 12 wherein said device user utilizes said order GUI to link user information from a user profile to said device order.

15. The system of claim 15 wherein said device user utilizes said order GUI to select one or more user preferences and device settings for said device order.

16. The system of claim 16 wherein said device user utilizes said order GUI to select one or more content items from a content catalogue for said device order.

17. The system of claim 12 wherein said order manager automatically selects current firmware and special offers for said device order.

18. The system of claim 17 wherein said order manager obtains embedding recommendations from a recommendation engine for said device order.

19. The system of claim 18 wherein said device user utilizes said order GUI to review and submit a finalized version of said device order for performing said device manufacturing process.

20. A method for implementing an electronic device, comprising:
coupling a memory device to said electronic device, said memory device storing embedded information for said electronic device to access and utilize; and
creating a device order to specifically identify said embedded information, said device order being utilized during a device manufacturing process to image said memory device with said embedded information.
